# DEMANDE DE BREVET EUROPEEN

(11) **EP 4 095 955 A1**
(43) Date de publication de la demande: **30.11.2022**
(21) Numéro de dépôt: 22175020.1
(22) Date de dépôt: 24.05.2022
(51) Int. Cl.: H01M 8/0213, H01M 8/0228, H01M 8/0258, H01M 8/0267, H01M 8/0271, H01M 8/0297, C25B 9/67, H01M 8/10

(54) **SÉPARATEUR BIPOLAIRE AMÉLIORÉ POUR RÉACTEUR ÉLECTROCHIMIQUE**

(30) Priorité: 26.05.2021 FR 2105452
(71) Demandeur: Alstom Hydrogène SAS, 13547 Aix en Provence Cedex 4 (FR)
(72) Inventeur: GUENOT, Benoit, 13100 AIX EN PROVENCE (FR); RAKOTONDRAINIBE, André, 13090 AIX-EN-PROVENCE (FR); GENTILS, Bruno, 83170 TOURVES (FR)
(74) Mandataire: Lavoix

(57) **Abrégé**

Le séparateur bipolaire est formé de la superposition de deux plaques de distribution (14) et deux plaques de refroidissement (16), les deux plaques de refroidissement (16) étant disposées entre les deux plaques de distribution (14), chaque plaque de distribution (14) possédant une face externe (14A) et une face interne (14B), la face externe (14) de chaque plaque de distribution (14) étant munie de canaux de distribution (20) pour l'écoulement d'un fluide réactif, les plaques de refroidissement (16) définissant des conduits internes (22) pour la circulation d'un fluide de refroidissement.

## Description

La présente invention concerne le domaine des réacteurs électrochimiques comprenant un empilement de séparateurs et d'assemblages membrane-électrodes définissant des cellules électrochimiques.

Un tel réacteur électrochimique est par exemple une pile à combustible pour la production d'électricité par réaction électrochimique entre un comburant et un combustible, ou un électrolyseur pour la séparation d'éléments chimiques d'un fluide en utilisant de l'électricité, par exemple pour la production de dihydrogène et de dioxygène à partir d'eau.

Dans un tel réacteur électrochimique, chaque assemblage membrane-électrodes se présente sous la forme d'un stratifié comprenant une membrane échangeuse d'ions insérée entre deux électrodes.

Chaque séparateur présente la forme d'une plaque, au moins une des deux faces du séparateur étant une face de distribution configurée pour être appliquée contre une face d'un assemblage membrane-électrodes pour canaliser un fluide de manière qu'il s'écoule le long de ladite face de l'assemblage membrane-électrodes.

Chaque cellule électrochimique est définie par un assemblage membrane-électrodes compris entre deux séparateurs, chacun des séparateurs définissant une chambre fluidique avec la face de l'assemblage membrane-électrodes contre laquelle il est appliqué pour la circulation d'un fluide, la réaction électrochimique étant réalisée par échange d'ions entre des fluides au travers de l'assemblage membrane-électrodes.

Il est possible de prévoir des séparateurs bipolaires, chaque séparateur bipolaire étant interposé entre deux assemblages membrane-électrodes, chaque séparateur bipolaire possédant deux faces de distribution, chacune des deux faces de distribution étant configurée pour être appliquée contre une face d'un assemblage membrane-électrodes respectif.

Un réacteur électrochimique comprend par exemple un empilement alterné de séparateurs bipolaires et d'assemblages membrane-électrodes, deux séparateurs d'extrémité étant ajoutés aux extrémités de l'empilement pour compléter les deux cellules électrochimiques disposées aux extrémités de l'empilement.

Un des buts de l'invention est de proposer un séparateur bipolaire de réacteur électrochimique qui soit facile et économique à fabriquer, tout en obtenant des performances satisfaisantes.

A cet effet, l'invention propose un séparateur bipolaire pour un réacteur électrochimique, le séparateur bipolaire étant formé de la superposition de deux plaques de distribution et deux plaques de refroidissement, les deux plaques de refroidissement étant disposées entre les deux plaques de distribution, chaque plaque de distribution possédant une face externe et une face interne, la face externe de chaque plaque de distribution étant munie de canaux de distribution pour l'écoulement d'un fluide réactif, les plaques de refroidissement définissant des conduits internes pour la circulation d'un fluide de refroidissement.

Selon des modes de réalisation particuliers, le procédé de fabrication comprend une ou plusieurs des caractéristiques optionnelles suivantes, prises individuellement ou selon toutes les combinaisons techniquement possibles :
- la zone de la face interne d'une ou chacune des plaque(s) de canalisation opposée aux canaux de distribution de la face externe est sensiblement plane ;
- la face interne d'une ou chacun des plaque(s) de distribution est sensiblement plane ;
- les conduits internes sont délimités entre les deux plaques de refroidissement ;
- chaque plaque de refroidissement présente une première face tournée vers la plaque de distribution adjacente et une deuxième face tournée vers l'autre paque de refroidissement ;
- une ou chacune des plaques de refroidissement présente, sur sa première face, au moins une gorge d'étanchéité pour la réception d'un joint d'étanchéité interposé entre cette plaque de refroidissement et la plaque de distribution adjacente ;
- la face interne de la plaque de distribution située en regard de la plaque de refroidissement est dépourvue de gorge d'étanchéité ;
- une ou chacune des plaques de refroidissement possède, sur sa deuxième face, des canaux de refroidissement définissant lesdits conduits internes ;
- la zone de la première face d'une ou chacune des plaques de refroidissement opposée aux canaux de refroidissement est sensiblement plane ;
- les canaux de refroidissement présentent une profondeur comprise entre 0,20 mm et 0,35 mm, en particulier une profondeur de 0,30 mm ;
- chacune des plaques de refroidissement possède, sur sa deuxième face, des canaux de refroidissement, chaque canal de refroidissement d'une des plaques de refroidissement étant situé en regard d'un canal de refroidissement de l'autre plaque de refroidissement et formant avec celui-ci un conduit interne ;
- le séparateur bipolaire comprend des orifices de distribution ménagés au travers du séparateur bipolaire pour le passage de fluides réactifs, chaque orifice de distribution étant associé au canaux de distribution d'une des plaques de distribution avec lesquels il est en communication fluidique, les canaux de distribution d'une ou chacune des plaques de distribution étant en communication fluidique avec un ou chacun des orifices de distribution via des orifices de raccordement ménagés au travers de la plaque de distribution et débouchant dans des conduits de raccordement définis entre la plaque de distribution et la plaque de refroidissement adjacente et débouchant dans les orifices de distribution ;
- une ou chacune parmi les plaques de distribution et les plaques de refroidissement est réalisée dans un matériaux à base de graphite, de préférence flexible, de graphite expansé ou de carbone ;
- une ou chacune parmi les plaques de distribution et les plaques de refroidissement présente une épaisseur comprise entre 0,4 et 0,6 mm, en particulier une épaisseur de 0,5 mm.

L'invention concerne aussi un réacteur électrochimique tel qu'une pile à combustible ou un électrolyseur, comprenant un empilement incluant en alternance des séparateurs bipolaires tels que définis ci-dessus et des assemblages membrane-électrodes.

L'invention concerne aussi un procédé de fabrication d'un séparateur bipolaire tel que défini ci-dessus, comprenant la mise en forme de quatre bandes de matière en parallèle, chaque bande de matière étant mise en forme par passage entre au moins une paire de rouleaux de mise en forme, deux des bandes de matière étant mises en forme pour former des plaques de distribution et deux des bandes de matière étant mises en forme pour former des plaques de refroidissement, la superposition des quatre bandes de matière mises en forme pour former une bande de séparateurs formée d'une succession de séparateurs bipolaires chacun formé de deux plaques de refroidissement interposées entre deux plaques de distribution, puis la découpe de la bande de séparateurs pour obtenir des séparateurs bipolaires.

L'invention et ses avantages seront mieux compris à la lecture de la description qui va suivre, donnée uniquement à titre d'exemple non limitatif, et faite en référence aux dessins annexés, sur lesquels :
- la Figure 1 est une vue en coupe d'un empilement d'un réacteur électrochimique, illustrant en particulier un assemble membrane-électrode interposé entre deux séparateurs bipolaires ;
- la Figure 2 est une vue en perspective assemblée d'un séparateur bipolaire présentant une structure stratifiée ;
- la Figure 3 est une vue en perspective éclatée du séparateur bipolaire de la Figure 2, illustrant la structure stratifiée du séparateur bipolaire, incluant deux plaques de distribution et deux plaques de refroidissement ;
- la Figure 4 est une vue schématique illustrant un procédé de fabrication de séparateurs bipolaires 4.

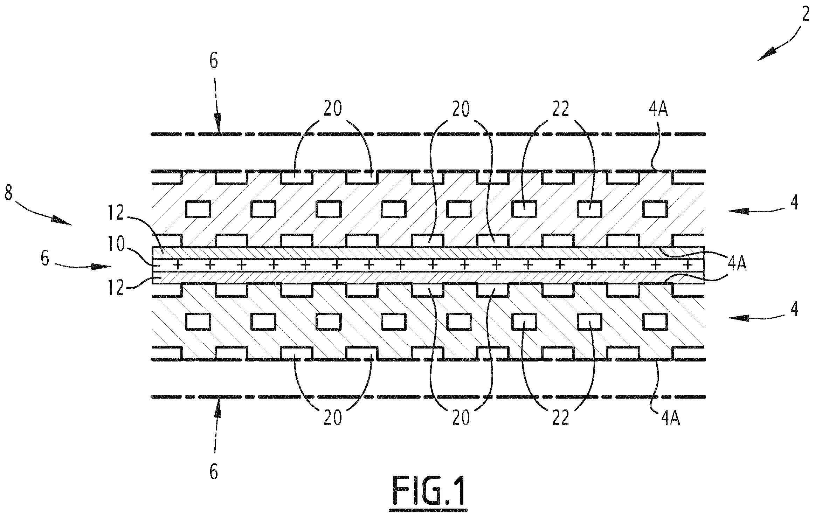

Le réacteur électrochimique 2 illustré sur la Figure 1 possède un empilement comprenant des séparateurs bipolaires 4 disposés en alternance avec des assemblages membrane-électrodes 6, définissant des cellules électrochimiques 8 superposées.

En pratique, l'empilement comprend aussi deux séparateurs d'extrémité (non représentés) disposés aux extrémités de l'empilement.

Chaque cellule électrochimique 8 est formée par un assemblage membrane-électrodes 6 interposé entre deux séparateurs, à savoir deux séparateurs bipolaires 4 ou un séparateur bipolaire 4 et un séparateur d'extrémité lorsqu'il s'agit d'une des deux cellules électrochimiques 8 situées aux extrémités de l'empilement.

En pratique, un réacteur électrochimique 2 peut comprendre plusieurs dizaines ou centaines de cellules électrochimique 8 superposées.

Seule une cellule électrochimique 8 formée d'un assemblage membrane-électrodes 6 disposé entre deux séparateurs bipolaires 4 est illustrée sur la Figure 1 pour des raisons de clarté des dessins.

Chaque assemblage membrane-électrodes 6 se présente sous la forme d'un stratifié formé d'une membrane échangeuse d'ions 10 interposée entre deux électrodes 12. La membrane échangeuse d'ions 10 est par exemple une membrane échangeuse de protons (ou PEM de l'anglais « Proton Exchange Membrane »).

Dans chaque cellule électrochimique 8, chacun des deux séparateurs est appliqué contre une face respective de l'assemblage membrane-électrodes 6.

Chacun des deux séparateurs situés de part et d'autre de l'assemblage membrane-électrodes 6 de chaque cellule électrochimique 8 (chacun des deux séparateurs bipolaires 4 dans la cas de la cellule électrochimique 8 de la Figure 1) est configuré pour canaliser un fluide réactif le long de la face de l'assemblage membrane-électrodes 6 contre laquelle il est appliqué, en vue de la réaction électrochimique avec échange d'ions entre les fluides réactifs canalisés par les deux séparateurs situés de part et d'autre de l'assemblage membrane-électrodes 6, les ions passant à travers l'assemblage membrane-électrode 6.

Si le réacteur électrochimique 2 est une pile à combustible, un des deux séparateurs est configuré pour canaliser un fluide combustible le long de la face de l'assemblage membrane-électrodes 6 contre laquelle il est appliqué, l'autre séparateur étant configuré pour canaliser un fluide comburant le long de l'autre face de l'assemblage membrane-électrodes 6 contre laquelle il est appliqué.

Chaque séparateur bipolaire 4 est disposé dans l'empilement en étant interposé entre deux assemblages membrane-électrodes 6.

Chaque séparateur bipolaire 4 présente la forme d'une plaque et possède deux faces de distribution 4A opposées, chacune des deux faces de distribution 4A étant configurée pour canaliser un fluide le long de la face de l'assemblage membrane-électrodes 6 contre laquelle cette face de distribution 4A est appliquée.

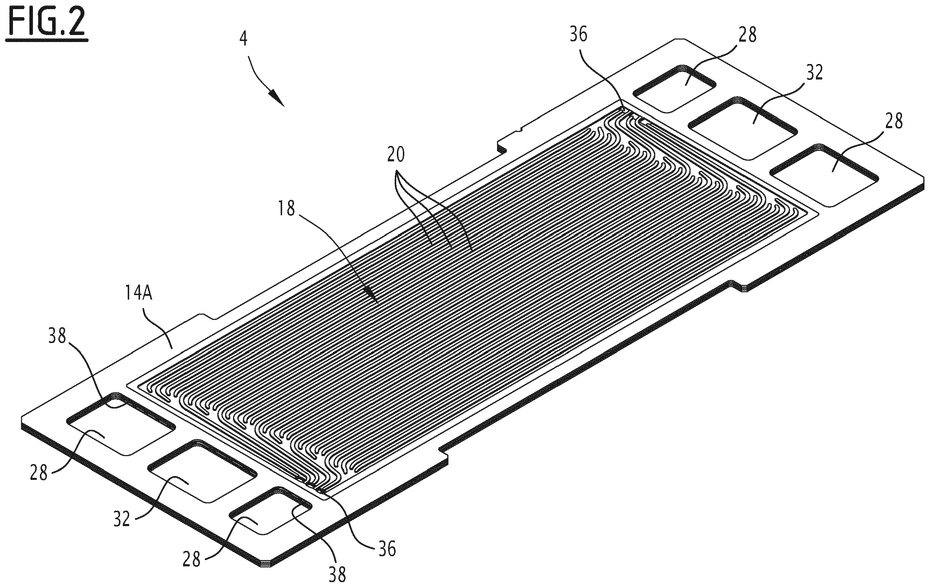

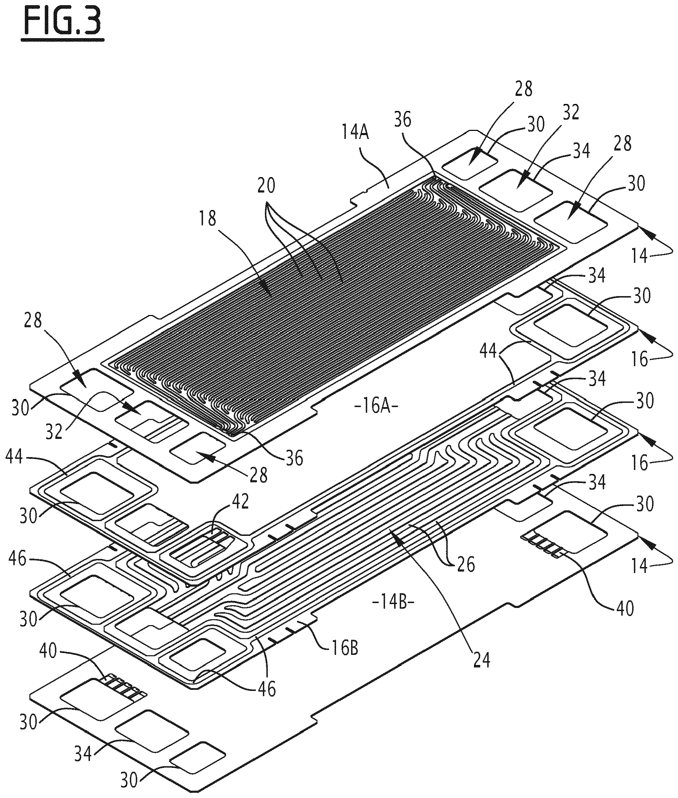

Les séparateurs bipolaires 4 sont analogues et un seul séparateur bipolaire 4 sera décrit plus en détail en référence aux Figures 2 et 3.

Comme illustré sur les Figures 2 et 3, le séparateur bipolaire 4 présente la forme d'une plaque possédant une structure stratifiée.

Le séparateur bipolaire 4 est formé de la superposition de deux plaques de distribution 14 et deux plaques de refroidissement 16, les deux plaques de refroidissement 16 étant situées entre les deux plaques de distribution 14.

Chaque plaque de distribution 14 possède une face externe 14A et une face interne 14B opposées.

La face externe 14A de chaque plaque de distribution 14 est tournée vers l'extérieur du séparateur bipolaire 4. Elle est destinée à être appliquée contre un assemblage membrane-électrodes 6. La face externe 14A de chaque plaque de distribution 14 définit une face de distribution 4A du séparateur bipolaire 4.

La face interne 14B est tournée vers l'intérieur du séparateur bipolaire 4. Elle est tournée vers l'autre plaque de distribution 14 du séparateur bipolaire 4.

Chaque plaque de refroidissement 16 est disposée entre une des deux plaques de distribution 14 et l'autre plaque de refroidissement 16.

Chaque plaque de refroidissement 16 possède une première face 16A tournée vers la plaque de distribution 14 contre laquelle elle est appliquée, et une deuxième face 16B tournée vers l'autre plaque de refroidissement 16.

La face externe 14A de chaque plaque de distribution 14 possède une zone de distribution 18 dans laquelle sont ménagés de canaux de distribution 20 pour l'écoulement d'un fluide réactif. Les canaux de distribution 20 sont configurés pour canaliser un fluide le long de la face de l'assemblage membrane-électrodes 6 contre lequel cette face externe 14A est appliquée.

De préférence, la zone de la face interne 14B située au dos de la zone de distribution de la face externe 14A, i.e. opposée à la zone de distribution 18 de la face externe 14A, est sensiblement plane.

En particulier, les canaux de distribution 20 sont formés en creux dans la face externe 14A, de préférence sans se retrouver en négatif sur la face interne 14B.

Les deux plaques de refroidissement 16 définissent des conduits internes 22 (Figure 1) pour la circulation d'un fluide de refroidissement. Les conduits internes 22 s'étendent à l'intérieur du séparateur bipolaire 4, dans l'épaisseur du séparateur bipolaire 4.

De préférence, les plaques de refroidissement 16 définissent les conduits internes 22 entre elles. Chaque conduit interne 22 est défini entre les deux plaques de refroidissement 16.

La deuxième face 16B de chaque plaque de refroidissement 16 possède par exemple une zone de refroidissement 24 munies de canaux de refroidissement 26 pour la circulation d'un fluide de refroidissement entre les deux plaques de refroidissement 16.

Dans un exemple de réalisation, chaque canal de refroidissement 26 de chaque plaque de refroidissement 16 est situé en regard d'un canal de refroidissement 26 de l'autre plaque de refroidissement 16 avec lequel il définit un conduit interne 22. Chaque conduit interne 22 est défini par un canal de refroidissement 26 d'une des deux plaques de refroidissement 16 situé en regard d'un canal de refroidissement 26 de l'autre des deux plaques de refroidissement 16.

Les zones de distribution 18 et les zones de refroidissement 24 sont de préférence alignées suivant la direction d'empilement des plaques de distribution 14 et des plaques de refroidissement 16.

Avantageusement, la zone de la première face 16A de chaque plaque de refroidissement 16 située au dos de la zone de refroidissement 24 de la deuxième face 16B de cette plaque de refroidissement 16, i.e. à l'opposée à la zone de refroidissement 24 de la deuxième face 16B de cette plaque de refroidissement 16, est sensiblement plane.

En particulier, les canaux de refroidissement 26 sont formés en creux sur la deuxième face 16B, de préférence sans se retrouver en négatif sur la première face 16A.

De préférence, chaque plaque de distribution 14 présente une épaisseur comprise entre 0,4 mm et 0,6 mm, par exemple une épaisseur d'environ 0,5 mm.

De préférence, chaque canal de distribution 20 présente une profondeur comprise entre 0,15 mm et 0,35 mm, par exemple une profondeur d'environ 0,30 mm.

De préférence, chaque plaque de refroidissement 16 présente une épaisseur comprise entre 0,4 mm et 0,6 mm, par exemple une épaisseur d'environ 0,5 mm.

De préférence, chaque canal de refroidissement 26 présente une profondeur comprise entre 0,20 mm et 0,35 mm, par exemple une profondeur d'environ 0,30 mm.

Le séparateur bipolaire 4 comprend des orifices traversant le séparateur bipolaire 4 pour former des collecteurs traversant l'empilement lorsque les séparateurs bipolaires 4 sont empilés avec les assemblages membrane-électrodes 6.

Les fluides réactifs alimentant les cellules électrochimiques 8 et le fluide de refroidissement arrivent chacun par un des orifices, qui définit un orifice d'entrée pour ce fluide, et repart par un autre des orifices, qui définit un orifice de sortie pour ce fluide.

Le séparateur bipolaire 4 comprend en particulier des orifices de distribution 28 ménagés au travers du séparateur bipolaire 4 pour le passage de fluide(s) réactif(s), chaque orifice de distribution 28 étant associé aux canaux de distribution 20 d'une des plaques de distribution 14 avec lesquels il est en communication fluidique.

Le séparateur bipolaire 4 comprend par exemple deux orifices de distribution 28 en communication fluidique avec les canaux de distribution 20 d'une des plaques de distribution 14, et deux autres orifices de distribution 28 en communication fluidique avec les canaux de distribution 20 de l'autre plaque de distribution 14.

Un des orifices de distribution 28 associé à chaque plaque de distribution 14 sert à l'alimentation des canaux de distribution 20 de cette plaque de distribution 14 en fluide réactif, l'autre servant à l'évacuation du fluide réactif après circulation dans les canaux de distribution 20 de cette plaque de distribution 14.

Chacun des orifices de distribution 28 est formé par l'alignement d'ouvertures de distribution 30 formée dans les plaques du séparateur bipolaire 4, à savoir les deux plaques de distribution 14 et les deux plaques de refroidissement 16.

Le séparateur bipolaire 4 comprend deux orifices de refroidissement 32, chaque orifice de refroidissement 32 étant en communication fluidique avec les conduits internes 22.

Un des orifices de refroidissement 32 sert à l'alimentation des conduits internes 22 en fluide de refroidissement, l'autre orifice de refroidissement 32 servant à l'évacuation du fluide de refroidissement après son passage dans les conduits internes 22.

Chacun des orifices de refroidissement 32 est formé par l'alignement d'ouvertures de refroidissement 34 formées dans les plaques du séparateur bipolaire 4.

Dans un exemple de réalisation, les canaux de distribution 20 d'une ou chacune des plaques de distribution 14 sont en communication fluidique avec un ou chacun des orifices de distribution 28 associés via des orifices de raccordement 36 ménagés au travers de la plaque de distribution 14 et débouchant dans des conduits de raccordement 38 définis entre la plaque de distribution 14 et la plaque de refroidissement 16 adjacente et débouchant dans les orifices de distribution 28.

Seul les extrémités de conduits de raccordement 38 débouchant dans deux des orifices de distribution 28 situé à gauche sur la Figure 2 sont visibles.

Chaque conduit de raccordement 38 est par exemple formé par un canal de raccordement 40 formé sur la face interne 14B de la plaque de distribution 14 et/ou un canal de raccordement 42 formé sur la première face 16A de la plaque de refroidissement 16 adjacente (Figure 3).

En particulier, chaque conduit de raccordement 38 est par exemple formé par un canal de raccordement 40 formé sur la face interne 14B de la plaque de distribution 14 et un canal de raccordement 42 formé sur la première face 16A de la plaque de refroidissement 16 adjacente, les deux canaux de raccordement 40, 42 étant situés en regard l'un de l'autre.

Sur la face externe 14A d'une ou de chaque plaque de distribution 14, les canaux de distribution 20 sont séparés d'une ou de chaque ouverture de distribution 30 définissant un orifice de distribution 28 associé à ces canaux de distribution 20.

Ce type de raccordement des canaux de distribution 20 d'une ou de chaque plaque de distribution 14 à un ou chaque orifice de distribution 28 associé évite de devoir prévoir une étanchéité autour de l'orifice de distribution 28 entre la face externe 14A et l'assemblage membrane-électrodes 6 adjacent, une étanchéité autour de la zone de distribution 18 étant alors suffisante.

Dans l'exemple illustré, les canaux de distribution 20 de chaque plaque de distribution 14 sont en communication fluidique avec chaque orifice de distribution 28 associé à ces canaux de distribution 20 via des orifices de raccordement 36 ménagés au travers de la plaque de distribution 14 et des conduits de raccordement 38 définis entre la plaque de distribution 14 et la plaque de refroidissement 16 adjacente.

Chaque conduit de raccordement 38 est formé par un canal de raccordement 40 formé sur la face interne 14B de la plaque de distribution 14 et un canal de raccordement 42 formé sur la première face 16A de la plaque de refroidissement 16 adjacente, les deux canaux de raccordement 40, 42 étant situé en regard l'un de l'autre.

Seul des canaux de raccordement 40 d'une plaque de distribution 14 et des canaux de raccordement 42 d'une plaque de refroidissement 16 sont visibles sur la Figure 3.

Avantageusement, la face interne 14B de chaque plaque de distribution 14 est sensiblement plane, en particulier au dos de la zone de distribution 18.

La face interne 14B de chaque plaque de distribution 14 est plane à l'exception d'éventuels canaux de raccordement 40, chaque canal de raccordement 40 assurant le raccordement d'au moins un orifice de raccordement 36 à un orifice de distribution 28.

En variante, la face interne 14B de chaque plaque de distribution 14 est complètement plane.

Dans un tel cas, des éventuels conduits de raccordement 38 sont par exemple délimités par des canaux de raccordement 42 prévus sur la première face 16A de la plaque de distribution adjacente 16.

Les conduits internes 22 sont raccordés fluidiquement aux deux orifices de refroidissement 32 du séparateur bipolaire 4.

Dans un exemple de réalisation, pour ce faire, les canaux de refroidissement 26 de chaque plaque de refroidissement 16 rejoignent chacune des ouvertures de refroidissement 34 de cette plaque de refroidissement 16.

Le séparateur bipolaire 4 est configuré pour assurer une étanchéité entre les plaques superposées formant le séparateur bipolaire 4.

En particulier, le séparateur bipolaire 4 est configuré pour assurer une étanchéité entre chaque plaque de distribution 14 et la plaque de refroidissement 16 adjacente et/ou entre les deux plaques de refroidissement 16.

L'étanchéité est par exemple assurée à l'aide de joints d'étanchéité (non représentés) logés dans des gorges d'étanchéité prévues sur les plaques superposées formant le séparateur bipolaire 4.

De préférence, les face internes 14B des plaques de distribution 14 sont dépourvues de gorge d'étanchéité.

Dans ce cas, les gorges d'étanchéité sont formées exclusivement dans les plaques de refroidissement 16, plus précisément sur les premières faces 16A et/ou les deuxièmes faces 16B des plaques de refroidissement 16.

Les gorges d'étanchéité sont configurées pour assurer l'étanchéité individuellement autour de chaque orifice de distribution 28 entre chaque plaque de distribution 14 et la plaque de refroidissement 16 adjacente.

Chaque plaque de refroidissement 16 comprend par exemple, sur sa première face 16A, des première gorges d'étanchéité 44 s'étendant autour de chaque ouverture de distribution 30 de la plaque de refroidissement 16, suivant une ligne fermée entourant individuellement cette ouverture de distribution 30.

Optionnellement, sur chaque plaque de refroidissement 16, les premières gorges d'étanchéité 44 sont configurées pour s'étendre à la périphérie de la première face 16A de la plaque de refroidissement 16 pour assurer une étanchéité entre la première face 16A de la plaque de refroidissement 16 et la face interne 14B de la plaque de distribution 14 adjacente sur toute la périphérie de celles-ci.

Les gorges d'étanchéité sont configurées pour assurer l'étanchéité individuellement autour de chaque orifice de distribution 28 entre les deux plaques de refroidissement 14, pour empêcher le passage d'un fluide réactif entre les deux plaques de refroidissement 14.

Chaque plaque de refroidissement 16 possède par exemple, sur sa deuxième face 16B, des deuxièmes gorges d'étanchéité 46 s'étendant autour de chaque ouverture de distribution 30 de la plaque de refroidissement 16, suivant une ligne fermée entourant individuellement cette ouverture de distribution 30.

Les gorges d'étanchéité sont configurées pour assurer l'étanchéité autour de chaque orifice de refroidissement 32 et de la zone de refroidissement 24 entre le plaques de refroidissement 16, pour canaliser le fluide de refroidissement d'un orifice de refroidissement 32 vers l'autre, en passant par les conduits internes 22 situés dans la zone de refroidissement 24.

Les deuxièmes gorges d'étanchéité 46 s'étendent suivant une lignée fermée s'étendant autour de la zone de refroidissement 24 en englobant entre outre chaque orifice de refroidissement 32.

Les deuxièmes gorges d'étanchéité 46 sont configurées pour assurer une séparation étanche entre la zone de refroidissement 24 et chacun des orifices de distribution 28, et entre les orifices de distribution 28.

Dans un exemple de réalisation, les deux plaques de distribution 14 ne sont pas identiques

Par exemple, comme illustré sur les Figures 2 et 3, les orifices de distribution 28 pour la circulation d'un fluide dans les canaux de distribution 20 d'une des deux plaques de distribution 14 sont plus grandd que les orifices de distribution 28 pour la circulation d'un fluide dans les canaux de distribution 20 de l'autre parmi les deux plaques de distribution 14.

La plaque de distribution 14 dont les canaux de distribution 20 sont reliés fluidiquement aux orifices de distribution 28 les plus grands, est munie de cinq orifices de raccordement 36 reliant les canaux de distribution 20 à chaque aux orifices de distribution 28, tandis que la plaque de distribution 14 dont les canaux de distribution 20 sont reliés fluidiquement aux orifices de distribution 28 les plus petits, est munie de trois orifices de raccordement 36 reliant les canaux de distribution 20 à chaque aux orifices de distribution 28.

Des orifices de distribution 28 de tailles différentes permettent de tenir compte de la stoechiométrie de la réaction électrochimique, et prévoyant dans les cellules électrochimiques 8 un débit de fluide réactif plus important pour un fluide réactif que pour l'autre fluide réactif.

Dans un exemple de réalisation, les deux plaques de refroidissement 16 ne sont pas identiques.

Dans l'exemple de réalisation de la Figure 3, chaque plaque de refroidissement 16 est munie de cinq canaux de raccordement 42 pour le raccordement à chacun des deux orifices de distribution 28 les plus grands, et de trois canaux de raccordement 42 pour le raccordement à chacun des deux orifices de distribution 28 les plus petits.

Dans un autre exemple de réalisation, les deux plaques de distribution 14 sont identiques et/ou les deux plaques de refroidissement 16 sont identiques.

Dans un exemple de réalisation, chacune des plaques de distribution 14 et/ou chacune des plaques de refroidissement 16 est réalisée à partir d'une feuille de matériau à base de graphite, de préférence flexible, de graphite expansé ou de carbone pur, en particulier le Graphtech^{®} commercialisé par la société GrafCell, le Graphoil, le Poco Graphite commercialisé par la société Entegris ou le SigraTherm^{®} commercialisé par la société SGL Carbon.

De préférence, les plaques de distribution 14 et les plaques de refroidissement 16 sont réalisées dans le même matériau.

Dans un exemple de réalisation, chacune des plaques de distribution 14 et/ou chacune des plaques de refroidissement 16 est réalisée par calandrage, embossage et/ou gaufrage d'une feuille ou d'une bande, en particulier par calandrage, embossage et/ou gaufrage par passage de la feuille ou d'une bande entre une paire de rouleaux de mise en forme configurés pour former des canaux, des gorges d'étanchéité et/ou des ouvertures dans la feuille ou la bande passant entre les deux rouleaux.

Dans un exemple de réalisation, une bande est passée entre les rouleaux de mise en forme pour former des canaux, des gorges d'étanchéité et/ou des ouvertures dans la bande pour former plusieurs plaques le long de la bande, avant de découper la bande en plaques séparées, chaque plaque formant, selon le cas, une plaque de distribution 14 ou une plaque de refroidissement 16.

Selon un procédé de fabrication avantageux, quatre bandes sont mises en forme en parallèle pour former des plaques sur chaque bande, deux bandes étant mise en forme pour former des plaques de distribution 14 et deux bandes étant mises en forme pour former des plaques de refroidissement 16, puis les bandes étant superposées de manière à former une bande de séparateurs comprenant une pluralité de séparateurs bipolaires 4 répartis le long de la bande de séparateurs, puis de couper la bande de séparateurs ainsi formée pour séparer les séparateurs bipolaires 4.

Le procédé de fabrication comprend en option l'application de joints d'étanchéité dans des gorges d'étanchéité et/ou de couches adhésives entre les bandes de plaques avant de superposer les bandes, de préférence sous pression, pour former la bande de séparateurs.

Le procédé de fabrication comprend en option le chauffage de la bande de séparateurs résultant de l'assemblage de bandes, par exemple pour polymériser des joints d'étanchéité et/ou une ou plusieurs couches adhésives disposé(e)s entre les bandes avant de les superposer.

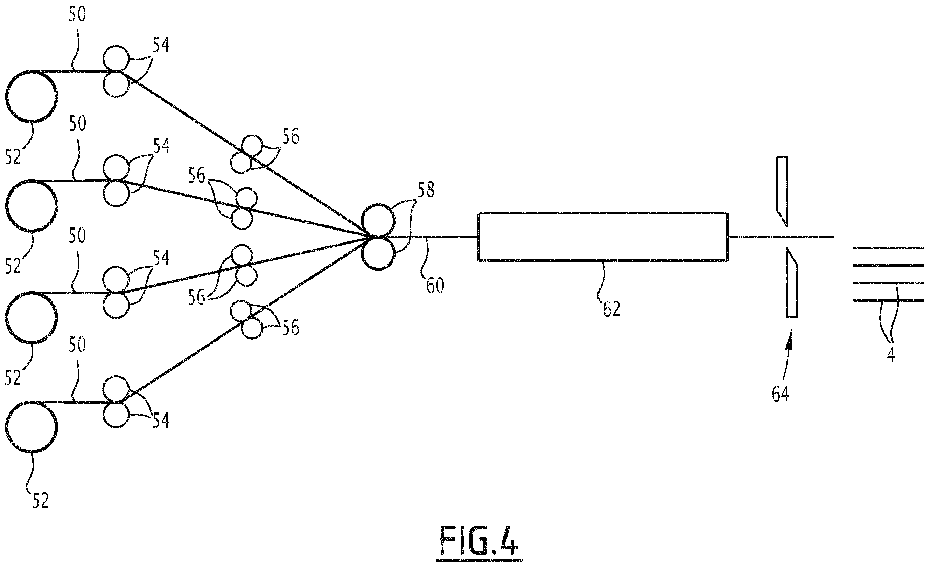

Dans l'exemple illustré sur la Figure 4, des séparateurs bipolaires 4 sont fabriqués à partir de quatre bandes de matière 50 réalisées dans le même matériau et, de préférence, conditionnées sous la forme de rouleaux 52.

Les bandes de matière 50 sont mises en forme en parallèles, assemblées, puis découpées pour obtenir les séparateurs bipolaires 4.

Chaque bande de matière 50 est mise en forme par passage entre les deux rouleaux d'au moins une paire de rouleaux de mise en forme 54 pour former des canaux (canaux de distribution, canaux de refroidissement, canaux de raccordement...), des gorges d'étanchéité et/ou des ouvertures (ouverture de distribution, ouvertures de refroidissement), par calandrage, embossage et/ou gaufrage.

Chaque bande de matière 50 reçoit ensuite optionnellement une couche adhésive et/ou un joint d'étanchéité, appliqué(e)(s) sur la bande de matière 50 par passage entre les deux rouleaux d'au moins une paire de rouleaux d'application 56.

Dans l'exemple illustré, chaque bande de matière 50 passe entre les deux rouleaux d'une paire de rouleaux d'application 56.

En variante, au moins des bandes de matière 50 ne passe pas entre deux rouleaux d'application 56 et/ou au moins une bande de matière 50 passe entre les deux rouleaux d'application d'au moins deux paires de rouleaux d'application 56.

Une bande de matière 50 peut par exemple passer entre les rouleaux de deux paires de rouleaux d'application 56, l'une appliquant une couche adhésive, l'autre appliquant un joint d'étanchéité.

Chaque paire de rouleaux d'application 56 peut par exemple appliquer une couche adhésive ou un joint d'étanchéité sur une seule des deux faces opposées de la bande de matière 50 ou appliquer une couche adhésive ou un joint d'étanchéité simultanément sur les deux faces opposées de la bande de matière 50, ou appliquer simultanément une couche adhésive sur une face de la bande de matière 50 et un joint d'étanchéité sur l'autre face de la bande de matière 50.

Les bandes de matière 50, éventuellement munies de joints d'étanchéité et/ou de couches adhésives, sont superposées en étant appliquées les unes contre les autres, de préférence en étant pressées les unes contre les autres, par exemple par passage entre deux rouleaux d'une paire rouleaux d'assemblage 58 qui appliquent les bandes de matière 50 les unes contre les autres.

Les bandes de matière 50 superposées forment une bande de séparateurs 60 formée d'une succession de séparateurs bipolaires 4 répartis le long de la bande de séparateurs 60.

En aval de la ou des paires de rouleaux d'assemblage 58, la bande de séparateurs 60 passe optionnellement dans une station de chauffage 62. La station de chauffage 62 permet par exemple de polymériser des couches adhésives et/ou des joints d'étanchéité interposés entre les bandes de matière 50.

La bande de séparateurs 60 est coupée en séparateurs bipolaires 4 individuels par un appareil de découpe 64.

Grâce à l'invention, il est possible de fabriquer facilement des séparateurs bipolaires 4 de qualité satisfaisante et en grande quantité.

La superposition de deux plaques de distribution 14 et de deux plaques de refroidissement 16 permet de fabriquer ces plaques à partir de feuilles ou de bandes minces réalisées dans un matériau présentant des caractéristiques intéressantes pour le fonctionnement du séparateur bipolaire 4 et pour sa fabrication.

Les fonctions de canalisation sont avantageusement réparties entre les plaques : canalisation des fluides réactifs par les plaques de distribution et canalisation du fluide de refroidissement par les plaques de refroidissement.

Les plaques peuvent être minces et peuvent être réalisées à partir de feuilles ou de bandes qui sont faciles à mettre en forme, par exemple par calandrage ou emboutissage entre des rouleaux de mise en forme.

L'utilisation de plaques minces permet la mise en oeuvre d'un procédé de fabrication en continu dans lequel les plaques de distribution et les plaques de refroidissement sont produites sous la forme de bande de matière 50 et réunies pour former une bande de séparateurs 60 qui est découpée en séparateurs bipolaires 4.

## Revendications

1. Séparateur bipolaire pour un réacteur électrochimique, le séparateur bipolaire étant formé de la superposition de deux plaques de distribution (14) et deux plaques de refroidissement (16), les deux plaques de refroidissement (16) étant disposées entre les deux plaques de distribution (14), chaque plaque de distribution (14) possédant une face externe (14A) et une face interne (14B), la face externe (14) de chaque plaque de distribution (14) étant munie de canaux de distribution (20) pour l'écoulement d'un fluide réactif, les plaques de refroidissement (16) définissant des conduits internes (22) pour la circulation d'un fluide de refroidissement.

2. Séparateur bipolaire selon la revendication 1, dans lequel la zone de la face interne d'une ou chacune des plaques de canalisation opposée aux canaux de distribution (20) de la face externe (14A) est sensiblement plane.

3. Séparateur bipolaire selon la revendication 1 ou la revendication 2, dans lequel la face interne (14B) d'une ou chacun des plaques de distribution (14) est sensiblement plane.

4. Séparateur bipolaire selon l'une quelconque des revendications précédentes, dans lequel les conduits internes (22) sont délimités entre les deux plaques de refroidissement (16).

5. Séparateur bipolaire selon l'une quelconque des revendications précédentes, dans lequel chaque plaque de refroidissement (16) présentant une première face (16A) tournée vers le plaques de distribution (14) adjacente et une deuxième face (16B) tournée vers l'autre paque de refroidissement (16).

6. Séparateur bipolaire selon la revendication 5, dans lequel une ou chacune des plaques de refroidissement (16) présente, sur sa première face, au moins une gorge d'étanchéité (44) pour la réception d'un joint d'étanchéité interposé entre cette plaque de refroidissement (16) et la plaque de distribution (14) adjacente.

7. Séparateur bipolaire selon la revendication 6, dans lequel la face interne (14B) de la plaque de distribution (14) située en regard de la plaque de refroidissement (16) est dépourvue de gorge d'étanchéité.

8. Séparateur bipolaire l'une quelconque des revendications 5 à 7, dans lequel une ou chacune des plaques de refroidissement (16) possède, sur sa deuxième face (16B), des canaux de refroidissement (26) définissant lesdits conduits internes (20).

9. Séparateur bipolaire selon la revendication 8, dans lequel la zone de la première face (16A) d'une ou chacune des plaques de refroidissement (16) opposée aux canaux de refroidissement (26) est sensiblement plane.

10. Séparateur bipolaire selon la revendication 8 ou la revendication 9, dans lequel les canaux de refroidissement (26) présentent une profondeur comprise entre 0,20 mm et 0,35 mm, en particulier une profondeur de 0,30 mm.

11. Séparateur bipolaire selon l'une quelconque des revendications 8 à 10, dans lequel chacune des plaques de refroidissement (16) possède, sur sa deuxième face (16B), des canaux de refroidissement (26), chaque canal de refroidissement (26) d'une des plaques de refroidissement (16) étant situé en regard d'un canal de refroidissement (26) de l'autre plaque de refroidissement (16) et formant avec celui-ci un conduit interne (22).

12. Séparateur bipolaire selon l'une quelconque des revendications précédentes, comprenant des orifices de distribution (28) ménagés au travers du séparateur bipolaire (4) pour le passage de fluide(s) réactif(s), chaque orifice de distribution (28) étant associé au canaux de distribution (20) d'une des plaques de distribution (14) avec lesquels il est en communication fluidique, les canaux de distribution (20) d'une ou chacune des plaques de distribution (16) étant en communication fluidique avec un ou chacun des orifices de distribution (28) via des orifices de raccordement (36) ménagés au travers de la plaque de distribution (14) et débouchant dans des conduits de raccordement (38) définis entre la plaque de distribution (14) et la plaque de refroidissement (16) adjacente et débouchant dans les orifices de distribution (28).

13. Séparateur bipolaire selon l'une quelconque des revendications précédentes, dans lequel une ou chacune parmi les plaques de distribution (14) et les plaques de refroidissement (16) est réalisée dans un matériaux à base de graphite, de préférence flexible, de graphite expansé ou de carbone.

14. Séparateur bipolaire selon l'une quelconque des revendications précédentes, dans lequel une ou chacune parmi les plaques de distribution (14) et les plaques de refroidissement (16) présente une épaisseur comprise entre 0,4 et 0,6 mm, en particulier une épaisseur de 0,5 mm.

15. Réacteur électrochimique tel qu'une pile à combustible un ou électrolyseur, comprenant un empilement incluant en alternance des séparateurs bipolaires (4) selon l'une quelconque des revendications précédentes et des assemblages membrane-électrodes (6).

16. Procédé de fabrication d'un séparateur bipolaire (4) selon l'une quelconque des revendications 1 à 14, comprenant la mise en forme de quatre bandes de matière (50) en parallèle, chaque bande de matière (50) étant mise en forme par passage entre au moins une paire de rouleaux de mise en forme, deux des bandes de matière (50) étant mises en forme pour former des plaques de distribution (14) et deux des bandes de matière (50) étant mises en forme pour former des plaques de refroidissement (16), la superposition des quatre bandes de matière (50) mises en forme pour former une bande de séparateurs (60) formée d'une succession de séparateurs bipolaires (4) chacun formé de deux plaques de refroidissement (16) interposées entre deux plaques de distribution (14), puis la découpe de la bande de séparateurs (60) pour obtenir des séparateurs bipolaires (4).
